# FASCICULE DE BREVET EUROPEEN

(11) **EP 3 811 604 B1**
(45) Date de publication et mention de la délivrance du brevet: **12.06.2024**
(21) Numéro de dépôt: 19742861.8
(22) Date de dépôt: 14.06.2019
(51) Int. Cl.: H04M 3/42, H04M 3/436

(54) **PROCÉDÉ ET DISPOSITIF DE FILTRAGE D'UNE COMMUNICATION**
VERFAHREN UND VORRICHTUNG ZUR FILTERUNG EINER KOMMUNIKATION
METHOD AND DEVICE FOR FILTERING A COMMUNICATION

(30) Priorité: 20.06.2018 FR 1855436
(43) Date de publication de la demande: 28.04.2021
(73) Titulaire: Orange, 92130 Issy-les-Moulineaux (FR)
(72) Inventeur: BOUVET, Bertrand, 92326 CHÂTILLON CEDEX (FR)
(74) Mandataire: Cabinet Beau de Loménie
(86) Numéro de dépôt international: PCT/FR2019/051438
(87) Numéro de publication internationale: WO 2019/243716

(56) Documents cités:
- FR-A1- 3 037 464
- US-B1- 8 379 816

## Description

### Arrière-plan de l'invention

L'invention se rapporte au domaine général des télécommunications. Elle concerne plus particulièrement le domaine de filtrage des appels indésirables.

Il arrive que certains appelés reçoivent des présentations de communications de courte durée appelées Ping Call. Une communication Ping Call a une durée suffisamment courte pour qu'un appelé n'ait pas le temps de l'accepter et pour que la présentation de cette communication ne soit pas redirigée vers une messagerie vocale de l'appelé. Une telle communication Ping Call, gratuite pour l'appelant, est suffisante pour afficher un numéro d'appelant sur le terminal appelé.

Une communication de type Ping Call est considérée comme indésirable pour l'appelé car elle cause des sonneries de courte durée et un encombrement de son journal de communications en absence.

Dans le cas où la communication de type Ping Call est redirigée vers une messagerie vocale de l'appelé, par exemple suite à un renvoi d'appel inconditionnel ou une occupation de l'appelé, des informations sont tracées au niveau de la messagerie vocale même si l'appelant ne laisse pas un message.

De plus, une communication Ping Call peut être émise par un appelant malveillant disposant d'un numéro surtaxé et visant à ce que l'appelé le rappelle.

En France, les appels indésirables, y compris les appels de type Ping Call, représentent environ 10% des appels entrants sur le réseau fixe. Des appelés en arrivent à débrancher leur téléphone de leur installation téléphonique fixe pour ne plus être dérangé et d'autres se désabonnent du service téléphonique fixe.

Il existe un besoin en une solution de filtrage des communications entrantes indésirables, notamment celles de type Ping Call, pour éviter ces inconvénients.

Le document FR 3037464 A1 décrit une solution pour filtrer des communications entrantes indésirables, dans laquelle si une identité certifiée du dispositif appelant diffère d'une identité non certifiée du dispositif appelant et que l'identité certifiée est présente dans une liste noire, la communication entrante est bloquée.

Enfin, le document US 8379816 B1 décrit une méthode de filtrage des communications entrantes indésirables de type Ping Call, dans laquelle si un identifiant associé à une communication entrante n'est pas présent parmi des listes de contacts, un retardateur est activé pour empêcher de notifier la communication entrante à un utilisateur pendant une certaine période.

### Objet et résumé de l'invention

L'invention vise un procédé de filtrage d'une communication, défini par la revendication 1, la communication dite d'origine, étant générée par un dispositif appelant vers un dispositif appelé, et identifiée par une identité appelante non certifiée et par au moins une identité appelante certifiée. Dans un mode de réalisation, le procédé comporte :
- une étape de vérification d'une condition satisfaite si l'identité appelante non certifiée et l'au moins une identité appelante certifiée sont différentes ; et si la condition est satisfaite,
- une étape de détection d'une expiration d'une durée d'attente consécutive à la vérification, la durée d'attente étant une durée correspondant à au moins une sonnerie du dispositif appelé ; et
- suite à l'étape de détection de l'expiration et en absence de détection d'un message indiquant la fin de la communication d'origine, une étape de présentation au dispositif appelé de la communication d'origine avec au moins une identité appelante parmi l'identité appelante non certifiée et ladite au moins une identité appelante certifiée, la communication d'origine n'étant pas présentée au dispositif appelé avant l'étape de détection.

Corrélativement, l'invention vise un dispositif de filtrage d'une communication, défini par la revendication 2, la communication, dite d'origine, étant générée par un dispositif appelant vers un dispositif appelé, et identifiée par une identité appelante non certifiée et par au moins une identité appelante certifiée. Dans un mode de réalisation, le dispositif comporte :
- un module de vérification configuré pour vérifier une condition satisfaite si l'identité appelante non certifiée et l'au moins une identité appelante certifiée sont différentes ;
- un module de détection configuré pour détecter une expiration d'une durée d'attente consécutive à la vérification si ladite condition est satisfaite, la durée d'attente étant une durée correspondant à au moins une sonnerie du dispositif appelé ; et
- un module de présentation de communications configuré pour présenter au dispositif appelé, la communication d'origine avec au moins une identité appelante parmi l'identité appelante non certifiée et ladite au moins une identité appelante certifiée, suite à la détection de l'expiration de la durée d'attente et en absence de détection d'un message indiquant la fin de la communication d'origine, la communication d'origine n'étant pas présentée au dispositif appelé avant ladite détection.

Dans un mode particulier de réalisation, l'étape de détection et le cas échéant l'étape de présentation sont mises en oeuvre si et seulement si la condition selon laquelle l'identité appelante non certifiée et l'au moins une identité appelante certifiée sont différentes est satisfaite.

Selon un exemple de réalisation, une communication peut être un appel téléphonique ou un appel visio-conférence ou autre forme de communication synchrone.

Selon un exemple de réalisation, la durée d'attente peut être supérieure ou égale à 3 secondes, ou supérieure ou égale à 5 secondes.

D'une façon générale, la durée moyenne d'une sonnerie est de 5 secondes et un renvoi d'appel sur non-réponse est configuré par défaut après 5 sonneries.

En général, une communication Ping Call a une durée supérieure à la durée d'une sonnerie (5 secondes), pour afficher une trace de cette communication chez le dispositif appelé, mais qui ne dépasse pas la durée d'un train de 4 sonneries (20 secondes), pour que la communication ne soit pas renvoyée.

Selon un exemple de réalisation, la durée d'attente ne dépasse pas 20 secondes.

La durée d'attente peut être une durée correspondant à au moins un retour d'appel, ou une durée prédéfinie correspondant à une durée moyenne de prise d'un appel constatée pour un ou plusieurs dispositifs appelés.

La durée d'attente peut correspondre à une durée moyenne de présentation des communications annulées sur un réseau, par exemple un réseau du dispositif appelé, ou un réseau comprenant un dispositif de filtrage conforme à l'invention et qui met en oeuvre le procédé de l'invention. Cette durée d'attente peut être obtenue à partir d'une base de données du réseau.

Dans un mode de réalisation, la durée d'attente est déterminée par un compteur exponentiel et limité, selon les étapes suivantes :
- a) pour toute nouvelle identité appelante certifiée, identifiant une communication d'origine au sens de l'invention, le compteur est initialisé avec une valeur initiale, par exemple une seconde ;
- b) si la communication identifiée par cette identité appelante certifiée se termine à ou après cette valeur initiale du compteur et sans qu'elle ne soit répondue par le dispositif appelé, alors la valeur du compteur est incrémentée, par exemple doublée avec un pas d'une seconde, sinon la valeur du compteur reste inchangée ; et
- c) l'étape b est répétée à chaque réception d'une nouvelle communication identifiée par la même identité appelante certifiée : si la nouvelle communication se termine à ou après la nouvelle valeur du compteur sans qu'elle ne soit répondue par le dispositif appelé, la valeur du compteur est incrémentée de nouveau, sinon elle reste inchangée.

La durée d'attente correspond à la dernière valeur du compteur. Selon ce mode de réalisation, la durée d'attente est adaptative.

Dans un mode de réalisation dans lequel la durée d'attente déterminée par le compteur exponentiel et limité, la valeur du compteur ne dépasse pas une valeur maximale correspondante à une durée conditionnant un renvoi de la communication, par exemple 25 secondes. Si la valeur du compteur atteint cette valeur maximale, alors elle reste inchangée même si une nouvelle communication non répondue par le dispositif appelé se termine à ou après cette valeur du compteur.

Dans un mode de réalisation, le dispositif appelé peut être composé de plusieurs équipements, tels qu'un mobile, une tablette, et/ou une montre connectée. Ces équipements peuvent partager une même identité publique, par exemple un même numéro téléphonique, ou avoir des identités publiques différentes comprises dans un même ensemble bénéficiant d'un service de diffusion de communications, par exemple un service de type « Service Fixed Line Supervision ». Conformément à l'art antérieur, une communication entrante sera dirigée vers les différents équipements du dispositif appelé simultanément ou séquentiellement si ces équipements n'ont pas tous la même priorité.

L'identité appelante non certifiée peut être insérée par le dispositif appelant.

Le dispositif appelant peut être un serveur, ou un autocommutateur téléphonique privé IPBX (pour « Internet Protocol Private Branch eXchange » en anglais) ou PABX (pour « Private Automatic Branch eXchange» en anglais) ou un terminal disposant d'une application spécifique lui permettant d'insérer l'identité appelante non certifiée.

Selon un exemple de réalisation, une identité appelante certifiée, dite aussi de type certifiée, est un Numéro de Désignation de l'Installation NDI.

Selon un exemple de réalisation, une identité appelante non certifiée, dite aussi de type non certifiée, est un Numéro de Désignation Supplémentaire NDS.

Une description sur les identités appelantes certifiée NDI et non certifiée NDS, conformément à l'art antérieur, est présentée en ce qui suit pour mieux comprendre l'invention.

Une identité appelante certifiée NDI est certifiée par une entité gérant le réseau du dispositif appelant, par exemple l'opérateur du dispositif appelant.

Dans un mode de réalisation dans lequel la communication est un appel téléphonique, cette identité NDI peut correspondre au numéro de téléphone associé à la ligne téléphonique réelle du dispositif appelant et fait partie du plan de numérotation international E.164.

Plusieurs identités appelantes certifiées peuvent identifier une même communication. Par exemple, conformément au protocole SIP (pour « Session Initiation Protocol » en anglais, norme IETF RFC 3261), un appel sortant d'une entreprise peut être identifié par un champ PAI (pour « Private Asserted Identity » en anglais) à un format SIP URI contenant le numéro du poste téléphonique appelant (dans une partie « utilisateur » conforme au format SIP URI) et un autre champ PAI à un format TEL URI correspondant au numéro de téléphone du standard de l'entreprise, les deux champs PAI étant inclus dans un message de présentation d'appel SIP INVITE.

Un message de présentation d'appel SIP INVITE peut contenir deux champs PAI ayant deux formats différents, mais qui contiennent une même information, par exemple un même numéro de téléphone contenu dans un champ PAI au format TEL URI et dans la partie utilisateur d'un champ PAI au format SIP URI.

Conformément à l'art antérieur, une identité appelante non certifiée NDS est transportée de manière transparente de bout en bout depuis le dispositif appelant jusqu'au dispositif appelé sans aucun contrôle ni d'un opérateur appelant ni d'un opérateur appelé ni d'un opérateur de transit, cette identité appelante non certifiée NDS étant insérée par l'installation du dispositif appelant.

Conformément au protocole SIP, une identité appelante non certifiée NDS peut être incluse dans un champ SIP FROM dans un message SIP INVITE. Selon l'état de la technique, le message SIP INVITE ne comporte qu'un seul champ SIP FROM.

Une identité appelante non certifiée peut être une identité masquée.

Une identité appelante non certifiée peut être une identité non disponible. Par exemple, un appel identifié par une identité appelante non certifiée non disponible, autrement dit un appel sans identité appelante non certifiée, peut être présenté par un message SIP INVITE comportant un champ SIP FROM vide, par exemple un champ FROM: "Unavailable" sip:unavailable@unknown.invalid. Typiquement lorsque la signalisation de la communication identifiée par cette identité appelante non certifiée emprunte un réseau ne supportant pas le type d'identités appelantes non certifiées, par exemple un réseau de vieille génération, l'identité appelante non certifiée est supprimée.

En France, c'est l'identité appelante non certifiée NDS qui est affichée sur le dispositif appelé. Par exemple, lorsqu'un centre d'appel émet des communications pour faire une campagne commerciale à la demande d'une société, le centre d'appel ne présente pas le numéro du centre d'appel, mais présente le numéro de la société comme identité appelante non certifiée NDS de sorte à ce que le dispositif appelé puisse rappeler la société et non pas le centre d'appel.

Dans d'autres pays, c'est l'identité appelante certifiée NDI qui est affichée sur le dispositif appelé.

Les caractéristiques et avantages du procédé de filtrage selon l'invention présentés ci-après s'appliquent de la même façon au dispositif de filtrage selon l'invention, et vice versa.

L'invention permet en particulier de minimiser les inconvénients d'une communication indésirable de type Ping Call en évitant qu'une telle communication ne soit présentée avec au moins une de ses identités appelantes au dispositif appelé avant l'expiration de la durée d'attente.

Dans un mode de réalisation, le procédé de filtrage comporte, suite à l'étape de vérification, des étapes de :
- mémorisation d'au moins une identité appelante parmi l'au moins une identité appelante certifiée et l'identité appelante non certifiée; et
- présentation au dispositif appelé, avant la détection de l'expiration de la durée d'attente, d'une communication provisoire anonymisée correspondant à la communication d'origine mais dans laquelle aucune desdites identités appelantes certifiée et non certifiée n'est présentée, au moins une des identités appelantes mémorisées étant remplacée par une identité appelante masquée du même type, ou présentée comme une identité non disponible (NDI-d, NDS-d) du même type.

Nous désignons par une communication anonymisée, une communication dont chacune de ces identités appelantes est une identité masquée ou non disponible.

L'invention permet ainsi d'alerter le dispositif appelé que la communication présentée est susceptible d'être une communication indésirable, par exemple de type Ping Call, la communication étant présentée en mode anonyme avant l'expiration de la durée d'attente. Le dispositif appelé peut donc prendre la décision de ne répondre à la communication qu'à l'expiration de la durée d'attente, si la communication d'origine est encore maintenue.

Dans un mode de réalisation dans lequel l'identité appelante non certifiée de la communication est déjà masquée ou non disponible, cette identité est présentée au dispositif appelé avant la détection de l'expiration de la durée d'attente sans être remplacée par une identité appelante non certifiée masquée ou non disponible.

L'invention permet de protéger le dispositif appelé de tentatives frauduleuses. En effet, si la communication se termine avant la détection de l'expiration de la durée d'attente, le dispositif appelé ne pourra pas rappeler le dispositif appelant, seules des identités masquées ou non disponibles lui ayant été présentées.

Dans un mode de réalisation relatif à la présentation de la communication provisoire anonymisée avant l'expiration de la durée d'attente, l'étape de présentation de la communication d'origine suite à la détection de l'expiration de la durée d'attente comporte une mise à jour de la communication provisoire anonymisée, en remplaçant l'au moins une identité appelante masquée ou présentée comme non disponible par l'identité appelante mémorisée du même type.

Ainsi, si la communication est maintenue après l'expiration de la durée d'attente, le dispositif appelé aura connaissance de la ou des identités appelantes de la communication d'origine et qui avaient été mémorisées par le dispositif de filtrage.

La mise à jour de la communication peut être basée sur une méthode SIP UPDATE (norme IETF RFC 3311).

Dans un autre mode de réalisation relatif aussi à la présentation de la communication provisoire anonymisée avant l'expiration de la durée d'attente, l'étape de présentation de la communication suite à l'expiration de la durée d'attente comporte :
- une annulation de la communication provisoire anonymisée ; et
- une génération et une présentation d'une nouvelle communication avec au moins une identité appelante parmi les identités appelantes mémorisées.

Selon ce mode, la nouvelle communication est présentée immédiatement après l'annulation de la communication provisoire anonymisée, sans impact sur l'éventuelle sonnerie du dispositif appelé.

Ce mode de réalisation peut être mis en oeuvre par des méthodes basiques du protocole SIP : un envoi d'un message SIP CANCEL indiquant la fin de communication provisoire anonymisée puis un envoi d'un message SIP INVITE présentant la nouvelle communication.

Dans un mode de réalisation, le procédé de filtrage comporte une étape de suppression dans un journal de communications du dispositif appelé d'une trace de la communication provisoire anonymisée.

L'étape de suppression de la trace de la communication provisoire peut être mise en oeuvre :
- suite à la détection de l'expiration de la durée d'attente et en absence de détection du message indiquant la fin de la communication d'origine, dans ce cas la communication d'origine est maintenue à ou après l'expiration de la durée d'attente et la communication provisoire anonymisée est annulée ; ou
- suite à la détection du message indiquant la fin de la communication d'origine, même en absence de détection de l'expiration de la durée d'attente.

L'étape de suppression de la trace de la communication provisoire anonymisée peut être mise en oeuvre par l'envoi vers le dispositif appelé d'un message spécifique comportant des moyens pour identifier la communication provisoire et une commande de suppression de sa trace, par exemple un nouveau message SIP DELETE contenant les mêmes identifiants SIP que ceux présents dans le message de présentation d'appel SIP INVITE d'une manière permettant au dispositif appelé de faire le lien avec la trace à détruire.

Le message SIP DELETE est nouveau par rapport à l'art antérieur concernant le protocole SIP.

Autrement, sur détection du message indiquant la fin de la communication d'origine et en absence de détection de l'expiration de la durée d'attente, l'étape de suppression de la trace de la communication provisoire anonymisée peut être mise en oeuvre selon les sous-étapes de:
- insertion dans le message indiquant la fin de la communication d'origine, d'une information permettant de signifier au dispositif appelé que la communication provisoire anonymisée présentée au dispositif appelé est qualifiée comme indésirable ; et
- envoi, au dispositif appelé, du message indiquant la fin de la communication d'origine.
L'insertion de l'information signifiant au dispositif appelé que la communication d'origine, et ainsi la communication provisoire anonymisée lui étant présentée, est qualifiée indésirable, peut se baser sur un nouveau code de raison (« reason code » en anglais, entête utilisée par le protocole SIP, norme IETF RFC 3326) inséré dans un message SIP CANCEL indiquant la fin de la communication d'origine.

Cette méthode basée sur l'insertion de l'information est plus simple que la méthode d'envoi d'un message spécifique, vu qu'elle réduit le nombre de messages échangés, seul le message indiquant la fin de la communication d'origine (SIP CANCEL) étant envoyé au dispositif appelé.

De plus, l'entête « reason code » du message SIP CANCEL est déjà exploitée (norme IETF RFC 3326) par des terminaux pour mettre à jour leurs journaux de communications. Par exemple dans le cas d'un appel entrant diffusé vers plusieurs terminaux, tous ces terminaux sont notifiés de l'appel entrant mais ils ne l'ont pas forcément tous accepté. Le message SIP CANCEL indiquant la fin de cet appel diffusé comporte une entête «reason code = Call Completed Elsewhere » indiquant à chacun de ces terminaux que la trace de cet appel doit être placée dans un journal d'appels entrants acceptés (même si l'appel n'a pas été pris en charge par le terminal) et non pas dans un journal d'appels entrants en absence.

Le code de raison indiquant que la communication est qualifiée indésirable, est nouveau par rapport à l'art antérieur concernant le protocole SIP, en particulier la norme IETF RFC 3326.

De la même façon, pour supprimer la trace d'une communication provisoire anonymisée annulée suite à l'expiration de la durée d'attente, l'étape de suppression comporte, suite à ladite annulation de la communication provisoire anonymisée, les sous-étapes de:
- insertion dans un message indiquant l'annulation de la communication provisoire anonymisée, d'une information permettant de signifier au dispositif appelé qu'une trace de cette communication provisoire anonymisée devrait être supprimée ; et
- envoi, au dispositif appelé, du message indiquant l'annulation de la communication provisoire anonymisée.

Dans un mode de réalisation, sur détection du message indiquant la fin de la communication d'origine avant la détection de l'expiration de la durée d'attente, la communication d'origine est considérée indésirable.

Dans un mode de réalisation, le procédé de filtrage comporte, si la communication d'origine est considérée indésirable, une étape d'enregistrement d'au moins une identité appelante parmi la ou les identités appelantes certifiée NDI et l'identité appelante non certifiée NDS dans une liste d'identités appelantes génératrices de communications indésirables, si l'identité en question n'est pas déjà enregistrée dans la liste.

L'invention permet alors de construire et de mettre à jour une liste relative à la réputation d'identités appelantes pour optimiser le procédé selon l'invention.

Dans un mode de réalisation, si la communication d'origine est considérée indésirable, le procédé de filtrage comporte une mise à jour de la durée d'attente en fonction d'une durée de la communication d'origine indésirable, la durée de la communication d'origine indésirable étant la durée séparant une détection d'une présence de cette communication d'origine par le dispositif de filtrage et la détection du message indiquant la fin de la communication d'origine.

En particulier si la durée de la communication d'origine indésirable est plus courte que la durée d'attente, alors la durée d'attente prend comme une nouvelle valeur la durée de la communication d'origine indésirable. Ainsi, la durée d'attente est adaptative et des communications de plus courtes durées peuvent être filtrées.

Dans un mode de réalisation, l'étape de vérification comporte aussi une vérification d'une condition satisfaite si la communication d'origine ne doit pas être renvoyée, par exemple à cause d'un renvoi inconditionnel, une occupation, ou une non-joignabilité du dispositif appelé car dans un tel cas, la communication d'origine ne risque pas d'être présentée au dispositif appelé.

Dans un mode de réalisation, l'étape de vérification comporte aussi une vérification d'une condition satisfaite si au moins une des identités appelantes, certifiée ou non certifiée, a été enregistrée dans la liste d'identités appelantes génératrices de communications indésirables, car dans un tel cas, la communication d'origine est susceptible d'être une communication indésirable.

Dans un mode de réalisation, l'étape de vérification comporte aussi une vérification d'une condition satisfaite si la communication d'origine a transité par une interconnexion internationale-nationale et si l'identité appelante non certifiée comprend un préfixe fixe national.

Le préfixe fixe national peut être un préfixe fixe national géographique, par exemple 01, 02, 03, 04 ou 05 en France, ou un préfixe fixe national non géographique, par exemple 09 en France.

Dans un mode de réalisation, le module de détection, compris dans le dispositif de filtrage, comporte un compteur à rebours temporel configuré pour obtenir et/ou surveiller la durée d'attente.

Dans un mode de réalisation, le dispositif de filtrage comporte en outre un module de sonnerie configuré pour envoyer au dispositif appelant un message d'indication de sonnerie du dispositif appelé sans pour autant que le dispositif appelé sonne.

Dans un mode de réalisation, le dispositif de filtrage comporte un module d'enregistrement configuré pour mémoriser au moins une identité appelante parmi l'au moins une identité appelante certifiée NDI et l'identité appelante non certifiée NDS. Le module de présentation de communications étant configuré en outre pour présenter au dispositif appelé, avant la détection de l'expiration de la durée d'attente, une communication provisoire anonymisée correspondante à la communication d'origine mais dans laquelle aucune des identités appelantes certifiée et non certifiée n'est présentée, au moins une des identités appelantes mémorisées étant remplacée par une identité appelante masquée du même type, ou présentée comme une identité non disponible du même type.

Dans un mode de réalisation, le dispositif de filtrage comporte en outre un module de réputation configuré pour enregistrer une liste d'identités appelantes génératrices de communications indésirables.

Dans un mode de réalisation, le dispositif de filtrage est implémenté dans un dispositif réseau parmi :
- un serveur réseau gérant le dispositif appelé ;
- un équipement de terminaison de réseau ;
- un serveur de messagerie associée au dispositif appelé ;
- un équipement d'interconnexion de réseau ;
- un commutateur téléphonique ;
- une plateforme de type point de commande de service SCP ; ou
- un serveur réseau gérant le dispositif appelant.

L'implémentation du dispositif de filtrage dans un équipement réseau permet avantageusement, lorsqu'une communication de type Ping Call est détectée, de limiter la signalisation vers le dispositif appelé et d'économiser les ressources du réseau (et en particulier les ressources du réseau d'accès utilisées pour acheminer la communication d'origine jusqu'au dispositif appelé, qui peuvent s'avérer critiques notamment dans le cas d'un accès radio).

Ce mode de réalisation permet en outre de ne pas monopoliser de ressources au niveau du dispositif appelé pour la communication d'origine pendant la durée d'attente (autrement dit, tant qu'on soupçonne une communication de type Ping Call). Le dispositif appelé reste joignable pendant cette durée d'attente et peut participer à d'autres communications.

Dans un autre mode de réalisation, le dispositif de filtrage est implémenté dans le dispositif appelé.

De ce fait, plusieurs équipements du réseau, le dispositif appelé et même le dispositif appelant peuvent mettre en oeuvre le procédé de l'invention.

L'invention vise également un programme d'ordinateur sur un support d'enregistrement, défini par la revendication 14, ce programme étant susceptible d'être mis en oeuvre dans un ordinateur ou dans un dispositif de filtrage d'une communication conforme à l'invention, ce programme comportant des instructions adaptées à la mise en oeuvre d'un procédé de filtrage d'une communication tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi des supports d'information ou d'enregistrement lisibles par un ordinateur, définis par la revendication 15, et comportant des instructions du programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, chaque support d'informations ou d'enregistrement peut être un circuit intégré dans lequel le programme est incorporé, le circuit étant adapté pour exécuter ou pour être utilisé dans l'exécution du procédé de filtrage d'une communication selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- La figure 1 est un organigramme représentant des étapes générales d'un procédé de filtrage conforme à l'invention ;
- La figure 2 est un organigramme représentant les étapes d'un procédé de filtrage conformément à un premier mode de réalisation de l'invention ;
- La figure 3 illustre l'architecture fonctionnelle d'un dispositif de filtrage selon le premier mode de réalisation ;
- La figure 4 est un organigramme représentant les étapes d'un procédé de filtrage conformément à un deuxième mode de réalisation de l'invention ;
- La figure 5 est un organigramme représentant les étapes d'un procédé de filtrage conformément à une variante du deuxième mode de réalisation de l'invention ;
- La figure 6 illustre l'architecture fonctionnelle d'un dispositif de filtrage selon le deuxième mode de réalisation ;
- La figure 7 est un organigramme représentant les étapes d'un procédé de filtrage, conformément à un mode de réalisation hérité du deuxième mode de réalisation ; et
- La figure 8 illustre l'architecture matérielle d'un dispositif de filtrage selon un mode de réalisation de l'invention.

### Description détaillée

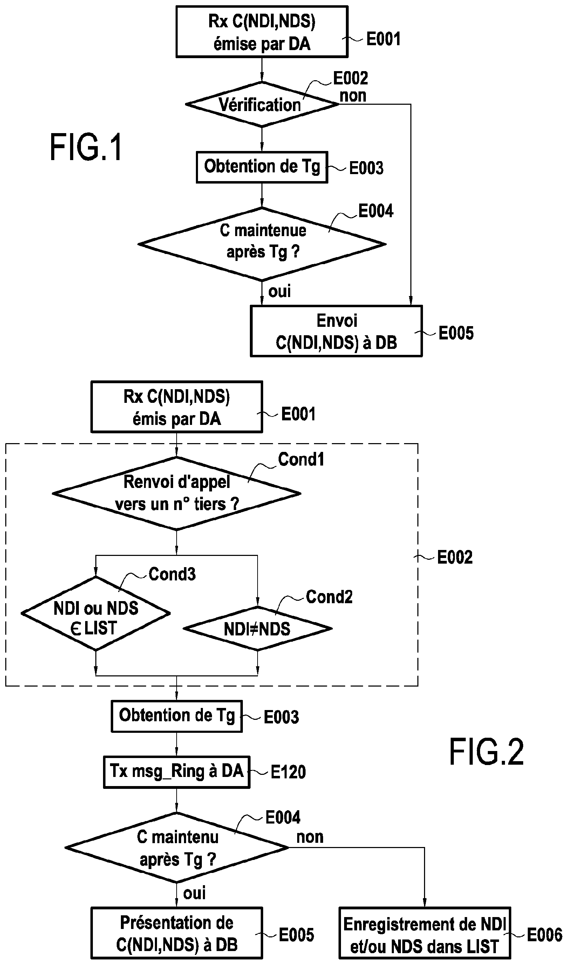

La **figure 1** est un organigramme représentant des étapes générales d'un procédé de filtrage d'une communication d'origine, le procédé étant conforme à l'invention.

Le procédé est mis en oeuvre par un dispositif de filtrage conforme à l'invention. Ce dispositif de filtrage est compris dans un réseau comportant au moins un dispositif appelant DA et un dispositif appelé DB.

Au cours d'une étape E001, le dispositif de filtrage reçoit une communication d'origine C émise par le dispositif appelant DA et destinée pour le dispositif appelé DB. La communication d'origine est identifiée par au moins une identité appelante certifiée NDI et par une identité appelante non certifiée NDS.

Au cours d'une étape E002, le dispositif de filtrage vérifie une condition satisfaite si l'identité appelante non certifiée NDS est différente de l'identité appelante certifiée NDI, s'il existe une seule identité NDI, ou de toutes les identités appelantes certifiées NDI s'il existe plusieurs identités NDI.

Si cette condition n'est pas satisfaite, le dispositif de filtrage présente cette communication d'origine au dispositif appelé DB au cours d'une étape E005 conformément à l'état de la technique.

Sinon, le dispositif de filtrage estime que la communication d'origine C peut représenter une communication d'origine indésirable, par exemple de type Ping Call.

Dans ce cas, au cours d'une étape E003, le dispositif de filtrage obtient une durée d'attente Tg durant laquelle il ne présente pas la communication d'origine C avec ses identités appelantes certifiée NDI et non certifiée NDS au dispositif appelé DB.

Au cours d'une étape E004, le dispositif de filtrage détecte l'expiration de la durée d'attente Tg.

En absence de détection d'un message indiquant la fin de la communication d'origine C à l'expiration de la durée d'attente Tg, le dispositif de filtrage présente au dispositif appelé DB la communication d'origine C avec ses identités appelantes certifiée NDI et non certifiée NDS au cours d'une étape E005.

Deux modes de réalisation particuliers sont maintenant décrits en détails.

### Description détaillée d'un premier mode de réalisation

La **figure 2** est un organigramme représentant des étapes d'un procédé de filtrage d'une communication d'origine, conforme à un premier mode de réalisation de l'invention.

Dans ce mode de réalisation, la communication d'origine est un appel téléphonique C. Les dispositifs appelant DA et appelé DB communiquent selon le protocole SIP.

Dans ce mode de réalisation, le procédé de l'invention est mis en oeuvre, en référence aux étapes E001, E002, E003, E120, E004, E005 et E006 décrites ultérieurement, par un serveur réseau D1 gérant le dispositif appelé DB, par exemple un commutateur du réseau du dispositif appelé DB en technologie circuit fixe RTC ou mobile 2G ou 3G ou bien un serveur d'application.

Au cours d'une étape E001, le serveur réseau D1 reçoit l'appel d'origine C destiné au dispositif appelé DB.

L'appel d'origine C est identifié par une identité appelante certifiée NDI et une identité appelante non certifiée NDS. Dans ce mode de réalisation, le dispositif appelant DA est un dispositif apte à insérer l'identité appelante non certifiée à l'appel d'origine C.

L'identité appelante certifiée NDI est certifiée par une entité gérant le réseau du dispositif appelant DA, par exemple l'opérateur du dispositif appelant DA. Cette identité NDI, transportée par le réseau jusqu'au serveur réseau D1, correspond au numéro de téléphone associée à la ligne téléphonique réelle du dispositif appelant DA.

L'identité appelante certifiée NDI est transmise dans un champ PAI dans un message de présentation d'appel SIP INVITE.

L'identité appelante non certifiée NDS est transportée de manière transparente de bout en bout depuis le dispositif appelant DA jusqu'au serveur D1 sans aucun contrôle de l'opérateur appelant, cette identité appelante non certifiée NDS étant insérée par l'installation téléphonique du dispositif appelant DA.

L'identité appelante non certifiée NDS est transmise dans un champ SIP FROM dans le message de présentation d'appel SIP INVITE.

Au cours d'une étape E002, le serveur D1 vérifie certaines conditions lui permettant d'estimer si l'appel d'origine C est un appel indésirable ou non.

Dans cet exemple, le serveur D1 vérifie une condition Cond1 satisfaite si l'appel d'origine C ne doit pas être redirigé vers un numéro différent d'une messagerie vocale associée au dispositif appelé DB, par exemple à cause d'occupation du dispositif appelé DB ou à cause de renvoi d'appel inconditionnel, ou encore à cause d'une non-joignabilité du dispositif appelé DB.

Si l'appel d'origine C doit être redirigé vers un numéro différent de celui de la messagerie vocale, le serveur D1 traite l'appel d'origine conformément à un procédé de l'art antérieur car l'appel d'origine ne sera pas présenté finalement au dispositif appelé DB.

Sinon (Cond1 est satisfaite) le serveur D1 continue à mettre en oeuvre d'autres étapes du procédé de l'invention.

Dans cet exemple, la condition Cond1 est satisfaite.

Le serveur D1 vérifie aussi les conditions suivantes :
- une condition Cond2 satisfaite si les identités appelantes certifiée NDI et non certifiée NDS sont différentes ; et
- une condition Cond3 satisfaite si au moins une identité appelante parmi les identités appelantes NDI et NDS a été enregistrée dans une liste LIST d'identités appelantes génératrices d'appels indésirables ; la liste LIST étant gérée par le serveur D1.

Si au moins une de ces conditions Cond2 ou Cond3 est satisfaite, le serveur D1 estime que l'appel d'origine C est susceptible d'être un appel de type Ping Call et continue ainsi à mettre en oeuvre le procédé de l'invention. Sinon, le serveur D1 traite l'appel d'origine C conformément à un procédé de l'art antérieur.

Dans cet exemple, toutes les conditions Cond1, Cond2 et Cond3 sont satisfaites.

Au cours d'une étape E003, le serveur D1 obtient une durée d'attente Tg. Dans cet exemple, cette durée d'attente Tg est suffisante pour filtrer des appels Ping Call d'une durée correspondant à la durée d'une sonnerie sur le dispositif appelé DB. La durée d'attente Tg a une valeur de 7 secondes.

Le serveur D1 peut obtenir la durée d'attente Tg du dispositif appelé DB ou de sa propre mémoire ou d'un autre équipement réseau.

Au cours d'une étape E120, le serveur D1 envoie au dispositif appelant DA un message msg_Ring simulant que le dispositif appelé DB est notifié de l'appel d'origine C, par exemple un message de sonnerie SIP 180 Ringing.

Ainsi, lorsque le dispositif appelant DA reçoit le message msg_Ring, il peut déclencher un compteur d'une durée maximale de présentation de l'appel d'origine C émis à destination du dispositif appelé DB, afin que cet appel d'origine C soit d'une courte durée (de type Ping Call).

Au cours d'une étape E004, le serveur D1 détecte l'expiration de la durée d'attente Tg et vérifie si l'appel d'origine C est encore maintenu par le dispositif appelant DA. Pour cela, le serveur D1 vérifie s'il a reçu, avant l'expiration de la durée d'attente Tg, un message SIP CANCEL mettant fin à l'appel d'origine C.

Dans un premier cas où l'appel d'origine C n'est pas maintenu à l'expiration de la durée d'attente Tg, le serveur D1 enregistre au cours d'une étape E006 au moins une identité parmi NDI et NDS dans la liste LIST si elle n'est pas déjà enregistrée.

Dans un deuxième cas où l'appel d'origine est encore maintenu à l'expiration de la durée d'attente Tg, au cours d'une étape E005, le serveur D1 présente l'appel d'origine C au dispositif appelant DB, avec ses identités appelantes certifiée NDI et non certifiée NDS. Par rapport aux procédés de présentation d'appel de l'art antérieur, la durée d'établissement d'appel est allongée de la valeur de la durée d'attente Tg. Cet allongement sera subi par le dispositif appelant DA mais n'aura aucun impact sur l'expérience du dispositif appelé DB.

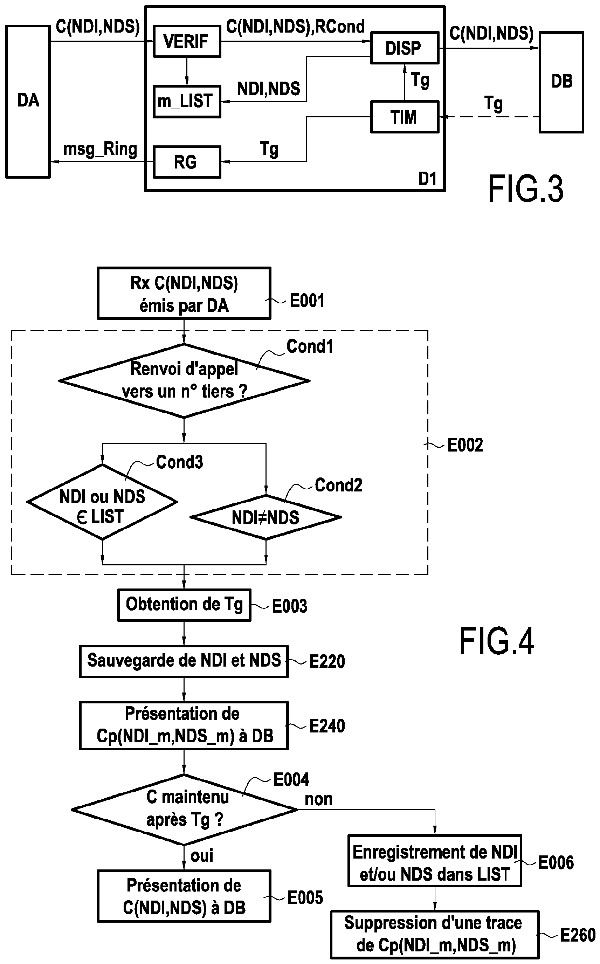

La **figure 3** présente une architecture fonctionnelle d'un dispositif D1 de filtrage d'une communication C, conforme au premier mode de réalisation de l'invention, ainsi que ses interactions avec les dispositifs appelant DA et appelé DB.

Dans cet exemple, le dispositif de filtrage est le serveur réseau D1 gérant le dispositif appelé DB.

Le dispositif de filtrage D1 comporte :
- un module de vérification VERIF configuré pour vérifier au moins une des conditions Cond1, Cond2 et Cond3 décrites en référence à la figure 2,
- un module de présentation de communications DISP configuré pour présenter l'appel d'origine C avec au moins une des identités appelantes certifiée NDI et non certifiée NDS au dispositif appelé DB en absence de détection d'un message indiquant la fin de l'appel d'origine C et suite à l'expiration de la durée Tg d'attente consécutive à la vérification des conditions Cond1, Cond2 et Cond3 ;
- un module de sonnerie RG configuré pour envoyer, au dispositif appelant DA, le message msg_Ring d'indication de sonnerie du dispositif appelé DB ;
- un module de réputation m_LIST configuré pour enregistrer la liste LIST d'identités appelantes génératrices d'appels indésirables ; et
- un compteur à rebours temporel TIM configuré pour obtenir la durée d'attente Tg et pour surveiller l'attente.

Le dispositif de filtrage D1, et plus précisément son module de vérification VERIF, reçoit, en provenance du dispositif appelant DA, l'appel d'origine C avec ses identités appelantes NDI et NDS. En particulier, pour vérifier la condition Cond3, le module VERIF consulte le module de réputation m_LIST. A la fin des vérifications, le module de vérification VERIF envoie les résultats RCond de ces vérifications au module de présentation de communications DISP et lui présente l'appel d'origine C.

Le module de sonnerie fictive RG envoie le message msg_Ring au dispositif appelant DA, tant que l'appel d'origine C est maintenu par le dispositif appelant DA, sans pour autant que le dispositif appelé DB ne sonne avant l'expiration de la durée d'attente Tg.

Le module de présentation de communications DISP obtient la durée d'attente Tg du compteur à rebours temporel TIM et ne présente l'appel d'origine C avec ses identités appelantes NDI et NDS au dispositif appelé DB qu'à l'expiration de la durée d'attente Tg si l'appel d'origine C est encore maintenu par le dispositif appelant DA.

Si l'appel d'origine C n'est pas maintenu à l'expiration de la durée d'attente Tg, le module de présentation de communications DISP envoie au moins une parmi les identités appelantes NDI et NDS au module de réputation m_LIST pour la mise à jour de la liste LIST.

Le compteur à rebours temporel TIM peut obtenir la durée d'attente Tg du dispositif appelé DB.

### Description détaillée d'un deuxième mode de réalisation

La **figure 4** est un organigramme représentant des étapes d'un procédé de filtrage d'une communication d'origine, conforme à un deuxième mode de réalisation de l'invention.

Dans ce mode de réalisation, la communication d'origine C est un appel téléphonique émis par un dispositif appelant DA et destiné pour un dispositif appelé DB. Les dispositifs appelant DA et appelé DB communiquent selon le protocole SIP.

Dans ce mode de réalisation, le procédé de l'invention est mis en oeuvre, en référence aux étapes E001, E002, E003, E220, E240, E004, E005, E006 et E260 décrites ultérieurement, par un serveur réseau D2 gérant le dispositif appelé DB, par exemple un commutateur du réseau du dispositif appelé DB en technologie circuit fixe RTC ou mobile 2G ou 3G ou par un serveur d'application.

Au cours d'une étape E001, le serveur D2 reçoit l'appel d'origine C destiné au dispositif appelé DB.

L'appel d'origine C est identifié par une identité appelante certifiée NDI et une identité appelante non certifiée NDS. Les identités appelantes certifiée NDI et non certifiée NDS sont respectivement transmises dans un champ SIP PAI et dans un champ SIP FROM dans un message de présentation d'appel SIP INVITE.

Au cours d'une étape E002 similaire à l'étape E002 décrite en référence à la figure 2, le serveur D2 vérifie certaines conditions lui permettant d'estimer si l'appel d'origine C est un appel indésirable ou non.

Dans cet exemple, le serveur D2 vérifie les conditions Cond1, Cond2 et Cond3 décrites en référence à la figure 2.

Au cours d'une étape E003 similaire à l'étape E003 décrite en référence à la figure 2, le serveur D2 obtient une durée d'attente Tg.

Au cours d'une étape E220, le serveur D2 enregistre dans une mémoire les identités appelantes NDI et NDS.

Au cours d'une étape E240, le serveur D2 présente un appel provisoire anonymisé Cp au dispositif appelé DB. Cet appel Cp correspond à l'appel d'origine C mais en ajoutant au message de présentation d'appel SIP INVITE, un champ SIP Privacy égale à « id, header » permettant de spécifier que l'identité appelante certifiée NDI incluse dans le champ SIP PAI ne doit pas être présentée sur le dispositif appelé DB, et en remplaçant dans le champ SIP FROM l'identité appelante non certifiée NDS par une identité appelante non certifiée masquée NDS_m, par exemple un champ SIP FROM: "Anonymous" sip:anonymous@anonymous.invalid.

La durée de présentation de l'appel provisoire anonymisé Cp est au plus égale à la durée d'attente Tg.

Le dispositif appelé DB reçoit alors l'appel Cp en mode anonyme. De ce fait, il saura que cet appel Cp est susceptible d'être un appel indésirable. Nous supposons dans cet exemple que le dispositif appelé DB ne répond pas à l'appel Cp.

Au cours d'une étape E004 similaire à l'étape E004 décrite en référence à la figure 2, le serveur D2 détecte l'expiration de la durée d'attente Tg et vérifie si l'appel d'origine C est encore maintenu par le dispositif appelant DA.

Dans un premier cas où l'appel d'origine C n'est pas maintenu à l'expiration de la durée d'attente Tg, au cours d'une étape E006 similaire à l'étape E006 décrite en référence à la figure 2, le serveur D2 enregistre au moins une identité parmi NDI et NDS dans la liste LIST si elle n'est pas déjà enregistrée.

Au cours d'une étape E260, le serveur D2 envoie une commande au dispositif appelé DB pour supprimer la trace de l'appel provisoire anonymisé Cp du journal de communications du dispositif appelé DB, pour que ce journal ne soit pas pollué. Cette étape E260 est optionnelle mais elle est préférée.

Dans ce mode de réalisation, le serveur D2 envoie au cours de l'étape E260, un message SIP DELETE reprenant l'ensemble des informations contenues dans le message SIP INVITE utilisé pour présenter l'appel provisoire anonymisé Cp au dispositif appelé DB au cours de l'étape E240 de sorte à ce que le dispositif appelé DB fasse le lien avec l'appel Cp à effacer. Ces informations comportent des identifiants techniques de dialogue SIP, par exemple de type Call-Id, From-Tag et/ou To-Tag. Le serveur D2 recevra du dispositif appelé DB, dans une étape ultérieure, un message d'acquittement SIP 200 OK.

Le message SIP DELETE est nouveau par rapport à l'état de la technique concernant le protocole SIP.

Dans un deuxième cas où l'appel d'origine C est encore maintenu, au cours d'une étape E005, le serveur D2 restaure les identités appelantes mémorisées NDI et NDS et présente au dispositif appelant DB un appel correspondant à l'appel d'origine C avec ses identités appelantes NDI et NDS.

Nous décrivons par la suite deux variantes relatives à l'étape E005 de ce deuxième mode de réalisation.

Selon la première variante, le serveur D2 met à jour l'appel provisoire anonymisé Cp présenté au dispositif appelé DB au cours de l'étape E240 en remplaçant les identités masquées NDI_m et NDS_m, respectivement par les identités sauvegardées NDI et NDS. Pour cela, le serveur D2 envoie un message SIP UPDATE (norme RFC 3311) au dispositif appelé DB. Ainsi, une seule trace de l'appel mis à jour, correspondant à l'appel d'origine C avec au moins une de ses identités NDI et NDS, apparait sur le journal de communications du dispositif appelé DB.

Selon cette première variante, le dispositif appelé DB supporte le message SIP UPDATE.

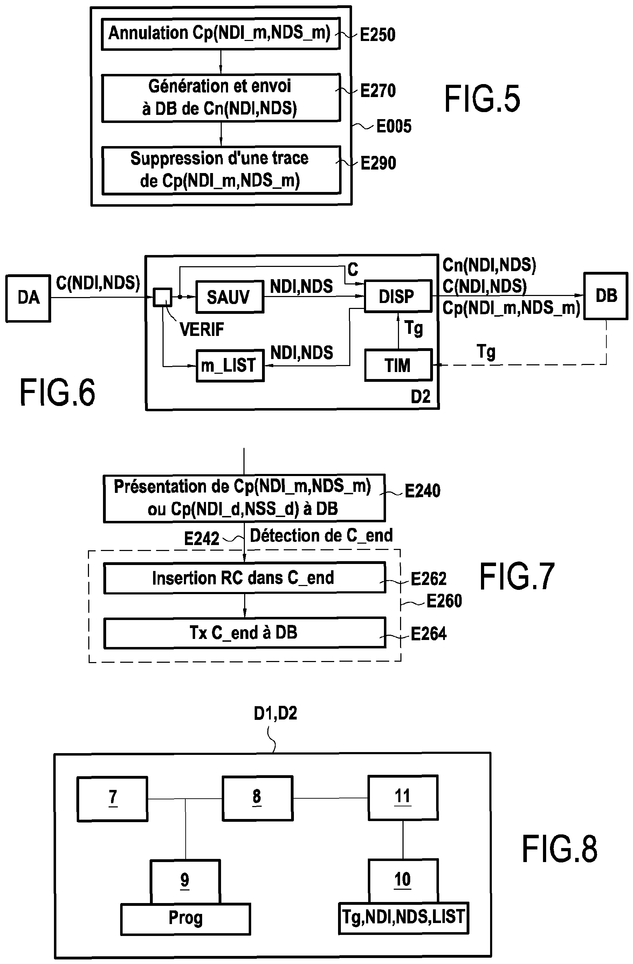

Selon la deuxième variante, illustrée par la **figure 5****,** le serveur D2 annule, au cours d'une étape E250, l'appel provisoire anonymisé Cp(NDI_m, NDS_m) présenté au dispositif appelé DB au cours de l'étape E240, génère un nouvel appel Cn(NDI, NDS) avec les identités appelantes sauvegardées NDI et NDS et présente ce nouvel appel Cn(NDI, NDS) au dispositif appelé DB au cours d'une étape E270. Le nouvel appel Cn(NDI, NDS), identique à l'appel d'origine C, présente une restauration de celui-ci.

Cette deuxième variante présente l'avantage de fonctionner à coup sûr au niveau du dispositif appelé DB car elle utilise les méthodes basiques SIP INVITE et SIP CANCEL. Deux traces d'appels sont générées sur le journal de communications du dispositif appelé DB correspondant à l'appel provisoire anonymisé Cp(NDI_m, NDS_m) et au nouvel appel Cn(NDI, NDS). Le serveur D2 peut mettre en oeuvre une étape E290 similaire à l'étape E260 pour supprimer la trace de l'appel provisoire anonymisé Cp (NDI_m, NDS_m) présenté au cours de l'étape E240.

La **figure 6** présente une architecture fonctionnelle d'un dispositif D2 de filtrage d'une communication d'origine C, conforme au deuxième mode de réalisation de l'invention, ainsi que ses interactions avec les dispositifs appelant DA et appelé DB.

Dans cet exemple, le dispositif de filtrage est le serveur réseau D2 gérant le dispositif appelé DB.

Le dispositif de filtrage D2 comporte :
- un module de vérification VERIF, similaire au module VERIF décrit en référence à la figure 3 ;
- un module de présentation de communications DISP configuré pour présenter au dispositif appelé DB:
   ∘ la communication provisoire anonymisée Cp avec des identités appelantes masquées NDI_m et NDS_m en remplacement des identités appelantes certifiée NDI et non certifiée NDS avant l'expiration de la durée d'attente Tg, et
   ∘ la nouvelle communication Cn avec au moins une des identités appelantes certifiée NDI et non certifiée NDS si la communication d'origine C est encore maintenue par le dispositif appelant DA à l'expiration de la durée d'attente Tg ;
- un module de réputation m_LIST similaire au module m_LIST décrit en référence à la figure 3 ;
- un compteur à rebours temporel TIM similaire au compteur TIM décrit en référence à la figure 3 ; et
- un module d'enregistrement SAUV configuré pour mémoriser les identités appelantes certifiée NDI et non certifiée NDS.

Si l'appel C n'est pas maintenu par le dispositif appelant DA à l'expiration de la durée d'attente Tg, le module de présentation de communications DISP obtient au moins les identités appelantes sauvegardées NDI et NDS du module d'enregistrement SAUV et l'envoie au module de réputation m_LIST pour la mise à jour de la liste LIST.

### Autres modes de réalisation

Dans un mode de réalisation, les dispositifs appelant DA et appelé DB communiquent selon un protocole circuit fixe, par exemple le protocole ISUP (pour « ISDN User Part Signaling » en anglais) pour un Réseau Téléphonique Commuté RTC ou un Réseau Numérique à Intégration de Services RNIS, ou selon un protocole circuit mobile, par exemple le protocole BICC (pour « Bearer-Independent Call Control» en anglais) pour un réseau mobile de 2ème ou 3ème génération. Dans ce mode de réalisation, l'identité appelante certifiée NDI est un champ de signalisation « Calling Party Number », alors que l'identité appelante non certifiée NDS est un champ de signalisation « Generic Number » ou « Additionnal Calling Party Number ».

Dans un mode de réalisation, le dispositif appelé DB comporte plusieurs terminaux.

Dans un mode de réalisation, la durée d'attente Tg est configurée pour filtrer des Ping Call d'une durée maximale correspondant à une durée de deux sonneries sur le dispositif appelé DB. Cette durée d'attente est par exemple de 12 secondes.

Dans un mode de réalisation, l'étape de vérification E002 comporte aussi une vérification d'une condition satisfaite si la communication d'origine C a transité par une interconnexion internationale-nationale et si l'identité appelante non certifiée NDS comprend un préfixe fixe national.

Pour vérifier si la communication d'origine C a transité par une interconnexion internationale-nationale, il est possible de tester une valeur d'un champ d'information de localisation contenant par exemple un code dédié unique indiquant la provenance internationale de la communication, cette valeur étant insérée par un équipement d'interconnexion géré par un opérateur national. En France par exemple, le code 99 est inséré pour les communications entrantes au territoire national.

Dans un mode de réalisation dans lequel la communication d'origine C doit être redirigée vers une messagerie vocale du dispositif appelé DB, le serveur D1 (respectivement D2) présente la communication d'origine C à la messagerie vocale au cours de l'étape E005 (respectivement les étapes E240 et E005).

Dans un mode de réalisation, la communication provisoire anonymisée Cp, présentée par le serveur D2 au dispositif appelé DB au cours de l'étape E240, est une communication sans identité appelante. Le serveur D2 supprime le champ SIP PAI pour que l'identité appelante certifiée NDI soit présentée comme une identité non disponible NDI_d, et remplace dans le champ SIP FROM l'identité appelante non certifiée NDS par une identité appelante non certifiée non disponible NDS_d, par exemple un champ SIP FROM: "Unavailable" (sip:unavailable@unknown.invalid).

Dans un mode de réalisation, la communication provisoire anonymisée Cp est identifiée uniquement par une seule identité appelante masquée ou non disponible NDI_m ou NDS_m.

Dans un mode de réalisation, la communication provisoire anonymisée Cp est identifiée par une identité appelante masquée d'un premier type et une identité appelante non disponible d'un deuxième type, par exemple une identité appelante certifiée masquée NDI_m et une identité appelante non certifiée non disponible NDS_d.

Dans un mode de réalisation dans lequel la communication d'origine C doit être redirigée vers une messagerie vocale du dispositif appelé DB, le serveur D2 envoie une commande de suppression d'une trace de la communication provisoire anonymisée Cp de la messagerie vocale au cours de l'étape E260 ou de l'étape E290.

Dans un mode de réalisation, la liste de réputation LIST est gérée par un autre dispositif réseau que le dispositif qui met en oeuvre le procédé de l'invention.

Dans un mode de réalisation hérité du deuxième mode de réalisation décrit en référence à la figure 4, si l'identité appelante non certifiée NDS de la communication d'origine C est déjà masquée ou non disponible, cette identité est présentée au dispositif appelé DB avant l'expiration de la durée d'attente Tg, sans être remplacée par une autre identité masquée ou non disponible du même type.

Dans un mode de réalisation hérité du deuxième mode de réalisation décrit en référence à la figure 4, suite à l'envoi du message SIP DELETE au dispositif appelé DB au cours de l'étape E260 ou de l'étape E290 pour supprimer la trace de l'appel provisoire Cp, le serveur D2 reçoit du dispositif appelé DB un code erreur, par exemple :
- un code 404 Not Found si la trace de l'appel Cp n'existe pas, par exemple si l'appelé a déjà lui-même effacé la trace de cet appel Cp ; ou
- un code 405 Method Not allowed si le dispositif appelé DB ne supporte pas le message SIP DELETE.

Dans un mode de réalisation hérité du deuxième mode de réalisation décrit en référence à la figure 4, le serveur D2 envoie au dispositif appelé DB le message SIP DELETE pour supprimer la trace de l'appel provisoire anonymisé Cp avant de relayer au dispositif appelé DB le message SIP CANCEL indiquant la fin de l'appel d'origine C.

Dans un mode de réalisation hérité du deuxième mode de réalisation décrit en référence à la figure 4, l'étape E260 de suppression de la trace de la communication provisoire anonymisée Cp précède l'étape E006 d'enregistrement d'au moins une des identités appelantes NDI et NDS dans la liste de réputation LIST.

Dans un mode de réalisation hérité du deuxième mode de réalisation décrit en référence à la figure 4, l'étape E260 de suppression de la trace de la communication provisoire anonymisée Cp précède même l'étape E004 de détection de l'expiration de la durée d'attente Tg. L'étape E260 est mise en oeuvre après l'étape E240 de présentation de la communication provisoire anonymisée Cp, et sur détection d'un message C_end indiquant la fin de la communication d'origine C.

La **figure 7** est un organigramme représentant des étapes d'un procédé de filtrage d'une communication d'origine, conforme à un mode de réalisation hérité du deuxième mode de réalisation décrit en référence à la figure 4. Le dispositif de filtrage D2 détecte un message C_end, de type SIP CANCEL, indiquant la fin de l'appel d'origine C, l'expiration de la durée d'attente Tg n'est pas encore détectée. Pour supprimer (E260) la trace de l'appel provisoire anonymisé Cp présenté au dispositif appelé DB au cours de l'étape E240, le dispositif de filtrage D2 insère, au cours d'une étape E262, dans une entête SIP reason code (norme IETF RFC 3326) du message SIP CANCEL, un nouveau code RC indiquant que l'appel d'origine C, et ainsi l'appel provisoire anonymisé Cp présenté au dispositif appelé DB, est un appel indésirable de type Ping Call. L'entête SIP reason code du message SIP CANCEL peut contenir par exemple un nouveau code « Ping_Call », ce nouveau code étant à ajouter à la norme IETF RFC 3326. Ensuite, au cours d'une étape E264, le dispositif de filtrage D2 envoie le message C_end au dispositif appelé DB. A la réception de ce message, le dispositif appelé DB met fin à la présentation de l'appel provisoire anonymisé Cp et devient en connaissance que cet appel Cp est de type Ping Call, il peut décider alors de supprimer sa trace de son journal de communications.

Dans un mode de réalisation hérité du deuxième mode de réalisation décrit en référence aux figures 4 et 5, pour supprimer (E290) la trace de l'appel provisoire anonymisé Cp annulé au cours de l'étape E250, l'étape de suppression E290 comporte, suite à l'annulation de l'appel provisoire anonymisé Cp, les sous-étapes de:
- insertion dans un message SIP CANCEL indiquant l'annulation de l'appel Cp, d'une information permettant de signifier au dispositif appelé DB qu'une trace de cet appel Cp devrait être supprimée, par exemple un nouveau code dans l'entête SIP reason code; et
- envoi, au dispositif appelé DB, du message SIP CANCEL indiquant l'annulation de l'appel provisoire anonymisé Cp.

Dans un mode de réalisation, suite à la détection d'un message indiquant la fin de la communication d'origine C, par exemple un message SIP CANCEL, avant à l'expiration de la durée d'attente Tg, le dispositif de filtrage D1, D2 enregistre (E006) au moins une identité NDI ou NDS dans la liste LIST, sans attendre la détection (E004) de l'expiration de la durée d'attente Tg.

### Description d'un dispositif de filtrage d'une communication conforme à l'invention

Deux exemples d'architecture fonctionnelle du dispositif de filtrage D1, D2, sont déjà décrits en référence aux figures 3 et 6.

Dans les modes de réalisation décrits ici, le dispositif de filtrage D1, D2 conforme à l'invention a l'architecture d'un ordinateur, telle qu'illustrée à la **figure 8****.** Elle comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif de filtrage D1, D2 selon l'invention constitue un support d'enregistrement conforme à l'invention, lisible par le processeur 7 et sur lequel est enregistré ici un programme d'ordinateur Prog conforme à l'invention.

La mémoire 10 du dispositif de filtrage D1, D2 permet d'enregistrer des variables utilisées pour l'exécution des étapes de l'invention, telles que la valeur du compteur à rebours TIM, la durée d'attente Tg, les identités appelantes NDI et NDS et la liste de réputation LIST.

Le programme d'ordinateur Prog définit des modules fonctionnels et logiciels ici, configurés pour filtrer une communication d'origine C. Ces modules fonctionnels s'appuient sur et/ou commandent les éléments matériels 7-11 du dispositif de filtrage D1, D2 cités précédemment.

Le dispositif de filtrage d'une communication d'origine C, conforme à l'invention, peut être implémenté dans un équipement réseau tel que par exemple :
- un serveur réseau gérant le dispositif appelé, tel que les serveurs D1 et D2 décrits précédemment ;
- un équipement de terminaison de réseau ;
- un serveur de messagerie associée au dispositif appelé DB ;
- un équipement d'interconnexion de réseau ;
- un commutateur téléphonique ;
- une plateforme de type point de commande de service SCP ; ou
- un serveur réseau gérant le dispositif appelant DA.

En variante, le dispositif de filtrage peut être implémenté dans le dispositif appelé DB.

## Revendications

1. Procédé de filtrage d'une communication (C), la communication dite d'origine (C) étant générée par un dispositif appelant (DA) vers un dispositif appelé (DB), et identifiée par une identité appelante non certifiée (NDS) et par au moins une identité appelante certifiée (NDI), ledit procédé comportant, lorsque ladite identité appelante non certifiée (NDS) et ladite au moins une identité appelante certifiée (NDI) sont différentes, après expiration d'une durée (Tg) d'au moins une sonnerie du dispositif appelé (DB), et en absence de détection d'un message (C_end) indiquant la fin de ladite communication d'origine (C), une présentation (E005) de ladite communication d'origine (C) audit dispositif appelé (DB) avec au moins une identité appelante parmi ladite identité appelante non certifiée (NDS) et ladite au moins une identité appelante certifiée (NDI), ladite communication d'origine (C) n'étant pas présentée au dispositif appelé (DB) avant ladite expiration (E004),
le procédé étant **caractérisé en ce qu'**il comporte, lorsque ladite identité appelante non certifiée (NDS) et ladite au moins une identité appelante certifiée (NDI) sont différentes :
- une présentation (E240) audit dispositif appelé (DB), avant ladite expiration (E004), d'une communication provisoire anonymisée (Cp) correspondant à ladite communication d'origine (C) mais dans laquelle aucune desdites identités appelantes certifiée (NDI) et non certifiée (NDS) n'est présentée, au moins une desdites identités appelantes (NDI, NDS) étant remplacée par une identité appelante masquée (NDI-m, NDS-m) du même type, ou présentée comme une identité non disponible (NDI-d, NDS-d) du même type.

2. Dispositif (D1, D2) de filtrage d'une communication (C), la communication dite d'origine étant générée par un dispositif appelant (DA) vers un dispositif appelé (DB), et identifiée par une identité appelante non certifiée (NDS) et par au moins une identité appelante certifiée (NDI), ledit dispositif comportant au moins un processeur configuré pour présenter audit dispositif appelé (DB) ladite communication d'origine (C) avec au moins une identité appelante parmi ladite identité appelante non certifiée (NDS) et ladite au moins une identité appelante certifiée (NDI), lorsque ladite identité appelante non certifiée (NDS) et ladite au moins une identité appelante certifiée (NDI) sont différentes, après expiration d'une durée (Tg) d'au moins une sonnerie du dispositif appelé (DB), et en absence de détection d'un message (C_end) indiquant la fin de la communication d'origine (C), ladite communication d'origine (C) n'étant pas présentée au dispositif appelé (DB) avant ladite expiration,
ledit dispositif (D1,D2) étant **caractérisé en ce que** ledit au moins un processeur est configuré pour, lorsque ladite identité appelante non certifiée (NDS) et ladite au moins une identité appelante certifiée (NDI) sont différentes :
- une présentation (E240) audit dispositif appelé (DB), avant ladite expiration (E004), d'une communication provisoire anonymisée (Cp) correspondant à ladite communication d'origine (C) mais dans laquelle aucune desdites identités appelantes certifiée (NDI) et non certifiée (NDS) n'est présentée, au moins une desdites identités appelantes (NDI, NDS) étant remplacée par une identité appelante masquée (NDI-m, NDS-m) du même type, ou présentée comme une identité non disponible (NDI-d, NDS-d) du même type.

3. Procédé de filtrage selon la revendication 1 ou dispositif de filtrage selon la revendication 2 dans lequel la présentation (E005) de ladite communication d'origine (C) comporte une mise à jour de ladite communication provisoire anonymisée (Cp), en remplaçant ladite au moins une identité appelante masquée (NDI-m, NDS-m) ou ladite au moins une identité appelante présentée comme une identité non disponible (NDI-d, NDS-d) par ladite identité appelante (NDI, NDS) remplacée.

4. Procédé de filtrage selon la revendication 1 ou dispositif de filtrage selon la revendication 2 dans lequel la présentation (E005) de ladite communication d'origine (C) comporte :
- une annulation (E250) de la communication provisoire anonymisée (Cp); et
- une génération et une présentation (E270) d'une nouvelle communication (Cn) avec au moins une desdites identités appelantes (NDI, NDS) de ladite communication d'origine.

5. Procédé de filtrage selon l'une des revendications 1 ou 4 comportant, ou dispositif de filtrage selon la revendication 2 ou 4 dans lequel ledit au moins un processeur est configuré pour, une suppression (E260, E290) dans un journal de communications dudit dispositif appelé (DB) d'une trace de la communication provisoire anonymisée (Cp).

6. Procédé de filtrage selon la revendication 5 ou dispositif de filtrage selon la revendication 5 **caractérisé en ce que** la suppression (E260) comporte, sur détection (E242) dudit message (C_end) indiquant la fin de ladite communication d'origine (C) et en absence de détection de ladite expiration :
- une insertion (E262) dans ledit message (C_end) indiquant la fin de la communication d'origine (C), d'une information (RC) permettant de signifier au dispositif appelé (DB) que ladite communication provisoire anonymisée (Cp) présentée audit dispositif appelé (DB) est qualifiée comme étant une communication indésirable ; et
- un envoi (E264), audit dispositif appelé (DB), dudit message (C_end) indiquant la fin de la communication d'origine (C).

7. Procédé de filtrage selon l'une des revendications 1 ou 3 à 6 ou dispositif de filtrage selon l'une des revendications 2 à 6 dans lequel, sur détection dudit message (C_end) indiquant la fin de ladite communication d'origine (C) avant ladite expiration (E004), ladite communication d'origine (C) est considérée indésirable.

8. Procédé de filtrage selon la revendication 7 comportant, ou dispositif de filtrage selon la revendication 7 dans lequel ledit au moins un processeur est configuré pour, un enregistrement (E006), si ladite communication d'origine (C) est considérée indésirable, d'au moins une identité appelante parmi ladite au moins une identité appelante certifiée (NDI) et ladite identité appelante non certifiée (NDS) dans une liste (LIST) d'identités appelantes génératrices de communications indésirables, si cet enregistrement n'est pas déjà effectué.

9. Procédé de filtrage selon l'une des revendications 7 à 8 comportant, ou dispositif de filtrage selon l'une des revendications 7 à 8 dans lequel ledit au moins un processeur est configuré pour, une mise à jour, si ladite communication d'origine (C) est considérée indésirable, de ladite durée (Tg) d'au moins une sonnerie en fonction d'une durée de ladite communication d'origine (C) indésirable.

10. Procédé de filtrage selon l'une des revendications 1 et 3 à 9 comportant, ou dispositif de filtrage selon l'une des revendications 2 à 9 dans lequel ledit au moins un processeur est configuré pour, une vérification (E002) d'au moins une des conditions suivantes :
- une condition (Cond1) satisfaite si ladite communication d'origine (C) ne doit pas être renvoyée ;
- une condition (Cond3) satisfaite si au moins une des dites identités appelantes (NDI, NDS) a été enregistrée dans ladite liste (LIST) d'identités appelantes génératrices de communications indésirables ; et
- une condition satisfaite si la communication d'origine (C) a transité par une interconnexion internationale-nationale et si l'identité appelante non certifiée (NDS) comprend un préfixe fixe national.

11. Procédé de filtrage selon l'une des revendications 1 et 3 à 10 ou dispositif de filtrage selon l'une des revendications 2 à 10, dans lequel la durée (Tg) d'au moins une sonnerie correspond à une durée d'au moins un retour d'appel, à une durée moyenne de prise d'un appel et/ou à une durée moyenne de présentation des communications annulées sur au moins un réseau de communication.

12. Procédé de filtrage selon l'une des revendications 1 et 3 à 11, ou dispositif de filtrage selon l'une des revendications 2 à 11, dans lequel la durée (Tg) d'au moins une sonnerie est inférieure à une durée conditionnant un renvoi de la communication.

13. Dispositif de filtrage selon l'une des revendications 2 à 12, étant implémenté dans un dispositif parmi :
- un serveur réseau gérant le dit dispositif appelé ;
- un équipement de terminaison de réseau ;
- un serveur de messagerie associée audit dispositif appelé ;
- un équipement d'interconnexion de réseau ;
- un commutateur téléphonique ;
- une plateforme de type point de commande de service SCP ; ou
- un serveur réseau gérant ledit dispositif appelant.

14. Programme d'ordinateur (Prog) comportant des instructions pour l'exécution d'un procédé de filtrage d'appels selon une des revendications 1 et 3 à 12, lorsque ledit programme est exécuté par un ordinateur.

15. Support d'enregistrement lisible par un ordinateur sur lequel est enregistré le programme d'ordinateur (Prog) selon la revendication 14.

## Patentansprüche

1. Verfahren zum Filtern einer Kommunikation (C), wobei die sogenannte Ursprungskommunikation (C) von einer anrufenden Vorrichtung (DA) zu einer angerufenen Vorrichtung (DB) hin generiert wird und durch eine nicht zertifizierte anrufende Identität (NDS) und durch mindestens eine zertifizierte anrufende Identität (NDI) identifiziert wird, wobei das Verfahren, wenn die nicht zertifizierte anrufende Identität (NDS) und die mindestens eine zertifizierte anrufende Identität (NDI) verschieden sind, nach Ablauf einer Dauer (Tg) von mindestens einem Klingelton der angerufenen Vorrichtung (DB) und bei Nichterkennung einer Nachricht (C_end), die das Ende der Ursprungskommunikation (C) angibt, eine Anzeige (E005) der Ursprungskommunikation (C) an der angerufenen Vorrichtung (DB) mit mindestens einer anrufenden Identität unter der nicht zertifizierten anrufenden Identität (NDS) und der mindestens einen zertifizierten anrufenden Identität (NDI) umfasst, wobei die Ursprungskommunikation (C) an der angerufenen Vorrichtung (DB) vor dem Ablauf (E004) nicht angezeigt wird,
wobei das Verfahren **dadurch gekennzeichnet ist, dass** es, wenn die nicht zertifizierte anrufende Identität (NDS) und die zertifizierte anrufende Identität (NDI) verschieden sind, umfasst:
- ein Anzeigen (E240) an der angerufenen Vorrichtung (DB), vor dem Ablauf (E004), einer anonymisierten vorläufigen Kommunikation (Cp), die der Ursprungskommunikation (C) entspricht, aber in der keine der zertifizierten (NDI) und nicht zertifizierten (NDS) anrufenden Identitäten angezeigt wird, wobei mindestens eine der anrufenden Identitäten (NDI, NDS) durch eine maskierte anrufende Identität (NDI-m, NDS-m) desselben Typs ersetzt wird, oder wie eine nicht verfügbare Identität (NDI-d, NDS-d) desselben Typs angezeigt wird.

2. Vorrichtung (D1, D2) zum Filtern einer Kommunikation (C), wobei die sogenannte Ursprungskommunikation von einer anrufenden Vorrichtung (DA) zu einer angerufenen Vorrichtung (DB) hin generiert wird und durch eine nicht zertifizierte anrufende Identität (NDS) und durch mindestens eine zertifizierte anrufende Identität (NDI) identifiziert wird, wobei die Vorrichtung mindestens einen Prozessor umfasst, der dazu ausgestaltet ist, an der angerufenen Vorrichtung (DB) die Ursprungkommunikation (C) mit mindestens einer anrufenden Identität unter der nicht zertifizierten anrufenden Identität (NDS) und der mindestens einen zertifizierten anrufenden Identität (NDI), wenn die nicht zertifizierte anrufende Identität (NDS) und die zertifizierte anrufende Identität (NDI) verschieden sind, nach Ablauf einer Dauer (Tg) von mindestens einem Klingelton der angerufenen Vorrichtung (DB) und bei Nichterkennung einer Nachricht (C_end), die das Ende der Ursprungskommunikation (C) angibt, anzuzeigen, wobei die Ursprungskommunikation an der angerufenen Vorrichtung (DB) vor dem Ablauf nicht angezeigt wird,
wobei die Vorrichtung (D1,D2) **dadurch gekennzeichnet ist, dass** der mindestens eine Prozessor ausgestaltet ist zu, wenn die nicht zertifizierte anrufende Identität (NDS) und die zertifizierte anrufende Identität (NDI) verschieden sind:
- ein Anzeigen (E240) an der angerufenen Vorrichtung (DB), vor dem Ablauf (E004), einer anonymisierten vorläufigen Kommunikation (Cp), die der Ursprungskommunikation (C) entspricht, aber in der keine der zertifizierten (NDI) und nicht zertifizierten (NDS) anrufenden Identitäten angezeigt wird, wobei mindestens eine der anrufenden Identitäten (NDI, NDS) durch eine maskierte anrufende Identität (NDI-m, NDS-m) desselben Typs ersetzt wird, oder wie eine nicht verfügbare Identität (NDI-d, NDS-d) desselben Typs angezeigt wird.

3. Verfahren zum Filtern nach Anspruch 1 oder Vorrichtung zum Filtern nach Anspruch 2, bei dem bzw. der das Anzeigen (E005) der Ursprungskommunikation (C) ein Aktualisieren der anonymisierten vorläufigen Kommunikation (Cp) umfasst, indem die mindestens eine maskierte anrufende Identität (NDI-m, NDS-m) oder die mindestens eine wie eine nicht verfügbare Identität (NDI-d, NDS-d) angezeigte anrufende Identität durch die ersetzte anrufende Identität (NDI, NDS) ersetzt wird.

4. Verfahren zum Filtern nach Anspruch 1 oder Vorrichtung zum Filtern nach Anspruch 2, bei dem bzw. der das Anzeigen (E005) der Ursprungskommunikation (C) umfasst:
- ein Annullieren (E250) der anonymisierten vorläufigen Kommunikation (Cp); und
- ein Generieren und ein Anzeigen (E270) einer neuen Kommunikation (Cn) mit mindestens einer der anrufenden Identitäten (NDI, NDS) der Ursprungskommunikation.

5. Verfahren zum Filtern nach einem der Ansprüche 1 oder 4, umfassend eine, oder Vorrichtung zum Filtern nach Anspruch 2 oder 4, bei welcher der mindestens eine Prozessor ausgestaltet ist zu einer, Unterdrückung (E260, E290), in einer Kommunikationsliste der angerufenen Vorrichtung (DB), einer Spur der anonymisierten vorläufigen Kommunikation (Cp).

6. Verfahren zum Filtern nach Anspruch 5 oder Vorrichtung zum Filtern nach Anspruch 5, **dadurch gekennzeichnet, dass** die Unterdrückung (E260) bei Erkennung (E242) der Nachricht (C_end), die das Ende der Ursprungskommunikation (C) angibt, und bei Nichterkennung des Ablaufs umfasst:
- ein Einfügen (E262) in die Nachricht (C_end), die das Ende der Ursprungskommunikation(C) angibt, einer Information (RC), die es ermöglicht, der angerufenen Vorrichtung (DB) mitzuteilen, dass die an der angerufenen Vorrichtung (DB) angezeigte anonymisierte vorläufige Kommunikation (Cp) als unerwünschte Kommunikation eingestuft wird; und
- ein Senden (E264), an die angerufene Vorrichtung (DB), der Nachricht (C_end), die das Ende der Ursprungskommunikation (C) angibt.

7. Verfahren zum Filtern nach einem der Ansprüche 1 oder 3 bis 6 oder Vorrichtung zum Filtern nach einem der Ansprüche 2 bis 6, bei dem bzw. der bei Erkennung der Nachricht (C_end), die das Ende der Ursprungskommunikation (C) angibt, vor dem Ablauf (E004) die Ursprungskommunikation (C) als unerwünscht betrachtet wird.

8. Verfahren zum Filtern nach Anspruch 7, umfassend ein, oder Vorrichtung zum Filtern nach Anspruch 7, bei welcher der mindestens eine Prozessor ausgestaltet ist zu einem, Speichern (E006), wenn die Ursprungskommunikation (C) als unerwünscht betrachtet wird, mindestens einer anrufenden Identität unter der mindestens einen zertifizierten anrufenden Identität (NDI) und der nicht zertifizierten anrufenden Identität (NDS) in einer Liste (LIST) mit unerwünschte Kommunikationen generierenden anrufenden Identitäten, wenn diese Speicherung nicht bereits erfolgt ist.

9. Verfahren zum Filtern nach einem der Ansprüche 7 bis 8, umfassend ein, oder Vorrichtung zum Filtern nach einem der Ansprüche 7 bis 8, bei welcher der mindestens eine Prozessor ausgestaltet ist zu einem, Aktualisieren, wenn die Ursprungskommunikation (C) als unerwünscht betrachtet wird, der Dauer (Tg) von mindestens einem Klingelton in Abhängigkeit von einer Dauer der unerwünschten Ursprungskommunikation (C).

10. Verfahren zum Filtern nach einem der Ansprüche 1 und 3 bis 9, umfassend eine, oder Vorrichtung zum Filtern nach einem der Ansprüche 2 bis 9, bei welcher der mindestens eine Prozessor ausgestaltet ist zu einer, Überprüfung (E002) mindestens einer der folgenden Bedingungen:
- einer Bedingung (Cond1), die erfüllt ist, wenn die Ursprungskommunikation (C) nicht umgeleitet werden soll;
- einer Bedingung (Cond3), die erfüllt ist, wenn mindestens eine der anrufenden Identitäten (NDI, NDS) in der Liste (LIST) mit unerwünschte Kommunikationen generierenden anrufenden Identitäten gespeichert worden ist; und
- einer Bedingung, die erfüllt ist, wenn die Ursprungskommunikation (C) über eine internationale-nationale Zusammenschaltung gelaufen ist und wenn die nicht zertifizierte anrufende Identität (NDS) eine nationale feste Vorwahl umfasst.

11. Verfahren zum Filtern nach einem der Ansprüche 1 und 3 bis 10 oder Vorrichtung zum Filtern nach einem der Ansprüche 2 bis 10, bei dem bzw. der die Dauer (Tg) von mindestens einem Klingelton einer Dauer von mindestens einem Rückruf, einer mittleren Anrufannahmedauer und/oder einer mittleren Anzeigedauer der annullierten Kommunikationen in mindestens einem Kommunikationsnetz entspricht.

12. Verfahren zum Filtern nach einem der Ansprüche 1 und 3 bis 11 oder Vorrichtung zum Filtern nach einem der Ansprüche 2 bis 11, bei dem bzw. der die Dauer (Tg) von mindestens einem Klingelton kürzer als die Dauer ist, die eine Umleitung der Kommunikation bedingt.

13. Vorrichtung zum Filtern nach einem der Ansprüche 2 bis 12, wobei sie einer Vorrichtung implementiert ist unter:
- einem Netzwerkserver, der die angerufene Vorrichtung verwaltet;
- einer Netzabschlusseinrichtung;
- einem Mailserver, welcher der angerufenen Vorrichtung zugeordnet ist;
- einer Netzwerkzusammenschaltungseinrichtung;
- einer Telefonvermittlungseinrichtung;
- einer Plattform vom Typ Service Control Point SCP; oder
- einem Netzwerkserver, der die anrufende Vorrichtung verwaltet.

14. Computerprogramm (Prog), das Anweisungen umfasst, die bei der Ausführung des Programms durch einen Computer ein Verfahren zum Filtern von Anrufen nach einem der Ansprüche 1 und 3 bis 12 ausführen.

15. Computerlesbares Speichermedium, auf dem das Computerprogramm (Prog) nach Anspruch 14 gespeichert ist.

## Claims

1. Method for filtering a communication (C), the communication, referred to as the original communication (C), being generated by a calling device (DA) to a called device (DB), and identified by an uncertified calling identity (NDS) and by at least one certified calling identity (NDI), said method comprising, when said uncertified calling identity (NDS) and said at least one certified calling identity (NDI) are different, after a duration (Tg) of at least one ring of the called device (DB) has expired, and if no message (C_end) indicating the end of said original communication (C) is detected, presenting (E005) said original communication (C) to said called device (DB) with at least one calling identity from among said uncertified calling identity (NDS) and said at least one certified calling identity (NDI), said original communication (C) not being presented to the called device (DB) before said expiry (E004),
the method being **characterized in that** it comprises, when said uncertified calling identity (NDS) and said at least one certified calling identity (NDI) are different:
- presenting (E240), to said called device (DB), before said expiry (E004), an anonymized provisional communication (Cp) corresponding to said original communication (C) but in which neither of said certified calling identity (NDI) and uncertified calling identity (NDS) is presented, at least one of said calling identities (NDI, NDS) being replaced with a masked calling identity (NDI-m, NDS-m) of the same type, or presented as an unavailable identity (NDI-d, NDS-d) of the same type.

2. Device (D1, D2) for filtering a communication (C), the communication, referred to as the original communication, being generated by a calling device (DA) to a called device (DB), and identified by an uncertified calling identity (NDS) and by at least one certified calling identity (NDI), said device comprising at least one processor configured to present, to said called device (DB), said original communication (C) with at least one calling identity from among said uncertified calling identity (NDS) and said at least one certified calling identity (NDI), when said uncertified calling identity (NDS) and said at least one certified calling identity (NDI) are different, after a duration (Tg) of at least one ring of the called device (DB) has expired, and if no message (C_end) indicating the end of the original communication (C) is detected, said original communication (C) not being presented to the called device (DB) before said expiry,
said device (D1, D2) being **characterized in that** said at least one processor is configured for, when said uncertified calling identity (NDS) and said at least one certified calling identity (NDI) are different:
- presenting (E240), to said called device (DB), before said expiry (E004), an anonymized provisional communication (Cp) corresponding to said original communication (C) but in which neither of said certified calling identity (NDI) and uncertified calling identity (NDS) is presented, at least one of said calling identities (NDI, NDS) being replaced with a masked calling identity (NDI-m, NDS-m) of the same type, or presented as an unavailable identity (NDI-d, NDS-d) of the same type.

3. Filtering method according to Claim 1 or filtering device according to Claim 2, wherein presenting (E005) said original communication (C) comprises updating said anonymized provisional communication (Cp), by replacing said at least one masked calling identity (NDI-m, NDS-m) or said at least one calling identity presented as an unavailable identity (NDI-d, NDS-d) with said replaced calling identity (NDI, NDS).

4. Filtering method according to Claim 1 or filtering device according to Claim 2, wherein presenting (E005) said original communication (C) comprises:
- cancelling (E250) the anonymized provisional communication (Cp); and
- generating and presenting (E270) a new communication (Cn) with at least one of said calling identities (NDI, NDS) of said original communication.

5. Filtering method according to one of Claims 1 and 4 comprising, or filtering device according to Claim 2 or 4 wherein said at least one processor is configured for, removing (E260, E290) a trace of the anonymized provisional communication (Cp) from a communications log of said called device (DB).

6. Filtering method according to Claim 5 or filtering device according to Claim 5, **characterized in that** removing (E260) comprises, when said message (C_end) indicating the end of said original communication (C) is detected (E242) and if said expiry is not detected:
- inserting (E262), into said message (C_end) indicating the end of the original communication (C), information (RC) which makes it possible to signal to the called device (DB) that said anonymized provisional communication (Cp) presented to said called device (DB) is labelled as being an undesirable communication; and
- sending (E264), to said called device (DB), said message (C_end) indicating the end of the original communication (C).

7. Filtering method according to one of Claims 1 and 3 to 6 or filtering device according to one of Claims 2 to 6, wherein, when said message (C_end) indicating the end of said original communication (C) is detected before said expiry (E004), said original communication (C) is considered undesirable.

8. Filtering method according to Claim 7 comprising, or filtering method according to Claim 7 wherein said at least one processor is configured for, storing (E006), if said original communication (C) is considered undesirable, at least one calling identity from among said at least one certified calling identity (NDI) and said uncertified calling identity (NDS) in a list (LIST) of calling identities which generate undesirable communications, if they have not already been stored.

9. Filtering method according to one of Claims 7 and 8 comprising, or filtering device according to one of Claims 7 and 8 wherein said at least one processor is configured for, updating, if said original communication (C) is considered undesirable, said duration (Tg) of at least one ring in accordance with a duration of said undesirable original communication (C) .

10. Filtering method according to one of Claims 1 and 3 to 9 comprising, or filtering device according to one of Claims 2 to 9 wherein said at least one processor is configured for, checking (E002) at least one of the following conditions:
- a condition (Cond1) met if said original communication (C) should not be forwarded;
- a condition (Cond3) met if at least one of said calling identities (NDI, NDS) was stored in said list (LIST) of calling identities which generate undesirable communications; and
- a condition met if the original communication (C) passed through an international-national interconnection and if the uncertified calling identity (NDS) comprises a national landline prefix.

11. Filtering method according to one of Claims 1 and 3 to 10 or filtering device according to one of Claims 2 to 10, wherein the duration (Tg) of at least one ring corresponds to a duration of at least one ringback, to an average call pickup duration and/or to an average duration of presenting the cancelled communications on at least one communication network.

12. Filtering method according to one of Claims 1 and 3 to 11, or filtering device according to one of Claims 2 to 11, wherein the duration (Tg) of at least one ring is shorter than a duration which conditions the forwarding of the communication.

13. Filtering device according to one of Claims 2 to 12, which is implemented in a device from among:
- a network server which manages said called device;
- a network termination equipment;
- a messaging server associated with said called device;
- a network interconnection equipment;
- a telephone switchboard;
- a platform of service control point (SCP) type; and
- a network server which manages said calling device.

14. Computer program (Prog) comprising instructions for executing a call filtering method according to one of Claims 1 and 3 to 12, when said program is executed by a computer.

15. Computer-readable storage medium on which the computer program (Prog) according to Claim 14 is stored.
